(19) **Europäisches Patentamt**
**European Patent Office**
**Office européen des brevets**

(11) **EP 4 033 417 A1**

(12) **EUROPEAN PATENT APPLICATION**
published in accordance with Art. 153(4) EPC

(43) Date of publication:
**27.07.2022 Bulletin 2022/30**

(21) Application number: **19948895.8**

(22) Date of filing: **16.10.2019**

(51) International Patent Classification (IPC):
**G06N 20/00** (2019.01)    **G06F 16/90** (2019.01)

(52) Cooperative Patent Classification (CPC):
**G06F 16/90; G06N 20/00**

(86) International application number:
**PCT/JP2019/040614**

(87) International publication number:
**WO 2021/074990 (22.04.2021 Gazette 2021/16)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **MITSUBISHI ELECTRIC
CORPORATION**
**Chiyoda-ku**
**Tokyo 100-8310 (JP)**

(72) Inventor: **MORI, Ikumi**
**Tokyo 100-8310 (JP)**

(74) Representative: **Plasseraud IP**
**66, rue de la Chaussée d'Antin**
**75440 Paris Cedex 09 (FR)**

(54) **SEARCH DEVICE, SEARCH METHOD, SEARCH PROGRAM, AND LEARNING MODEL SEARCH SYSTEM**

(57)    A search device (10) acquires first data obtained by performing a basis transformation on a feature vector in a transfer source device (20) based on information content on each feature axis. The search device (10) also acquires second data obtained by performing a basis transformation on a feature vector in a transfer target device (30) based on information content on each feature axis. The search device (10) judges whether the first data and the second data are similar so as to judge whether the transfer source device (20) is appropriate as a transfer source.

Fig. 1

EP 4 033 417 A1

**Description**

**Technical Field**

The present invention relates to a technique of searching for a transfer source in transfer learning.

**Background Art**

An increasing number of solutions are using artificial intelligence (AI) on Internet of things (IoT) devices. For example, the following applications may be pointed out: (1) control of IoT home appliances such as air conditioning and lighting, (2) failure analysis of production equipment, (3) inspection, through images, of products on a production line, (4) detection, through video, of intrusion by a suspicious person at the entrance of a building or the like, (4) energy demand prediction in an energy management system (EMS), and (5) failure analysis in a plant.

When AI is used on a per IoT device basis, it is difficult to secure a sufficient number of sets of training data to be used for a learning process. Thus, learning needs to be performed efficiently with a small amount of training data. As a method for learning with a small amount of training data, there is a method called transfer learning, in which training data and a learning model in an environment different from the environment in which the training data is collected is transferred.

In transfer learning, in order to determine a transfer source, the potential to be a transfer source is evaluated for all sets of potential transfer source data individually. If "positive transfer", which indicates that transfer is effective, can be confirmed as a result of evaluation, the evaluated data is decided as transfer source data. It is desirable that this evaluation be made automatically, but there may be a situation where human intervention is involved in some way.

Patent Literature 1 describes a technique of evaluating the potential to be a transfer source. Specifically, Patent Literature 1 describes that learning is attempted using training data of a transfer source and the effectiveness of transfer is judged using a difference between a result of inference using data of a transfer target as input and a result of inference using data of the transfer source as input.

**Citation List**

**Patent Literature**

Patent Literature 1: JP 2016-191975 A

**Summary of Invention**

**Technical Problem**

In the technique described in Patent Literature 1, when the potential to be a transfer source is evaluated, it is necessary to attempt learning using training data of a transfer source, and if the transfer source has a large search space, this takes processing time.

An object of the present invention is to allow an appropriate transfer source to be determined in a short processing time.

**Solution to Problem**

A search device according to the present invention includes

a first acquisition unit to acquire first data obtained by performing a basis transformation on a feature vector in a transfer source device based on information content on each feature axis;
a second acquisition unit to acquire second data obtained by performing a basis transformation on a feature vector in a transfer target device based on information content on each feature axis; and
a similarity judgment unit to judge whether the first data acquired by the first acquisition unit and the second data acquired by the second acquisition unit are similar.

**Advantageous Effects of Invention**

In the present invention, it is judged whether sets of data, each obtained by performing a basis transformation on feature vectors based on information content on each feature axis, are similar. The potential to be a transfer source can be evaluated based on whether sets of data are similar. A process of determining whether sets of data are similar takes less processing time compared with a process of attempting learning using training data of a transfer source. Therefore, an appropriate transfer source can be determined in a short processing time.

**Brief Description of Drawings**

Fig. 1 is a configuration diagram of a learning model search system 100 according to a first embodiment;
Fig. 2 is a configuration diagram of a search device 10 according to the first embodiment;
Fig. 3 is a configuration diagram of a transfer source device 20 according to the first embodiment;
Fig. 4 is a configuration diagram of a transfer target device 30 according to the first embodiment;
Fig. 5 is a diagram describing overall processing of the learning model search system 100 according to the first embodiment;
Fig. 6 is a flowchart of a first data transmission process of the transfer source device 20 according to the first embodiment;
Fig. 7 is a diagram describing a basis transformation process according to the first embodiment;
Fig. 8 is a diagram describing a normalization process according to the first embodiment;
Fig. 9 is a diagram describing a vector $z^{\wedge \rightarrow}$ according to the first embodiment;
Fig. 10 is a diagram describing a two-dimensional image according to the first embodiment;
Fig. 11 is a diagram describing a correspondence relationship between axes according to the first embodiment;
Fig. 12 is a flowchart of a second data transmission process of the transfer target device 30 according to the first embodiment;
Fig. 13 is a flowchart of a search process of the search device 10 according to the first embodiment;
Fig. 14 is a flowchart of a similarity degree calculation process when it is judged that uncorrelatedness is ruled out according to the first embodiment;
Fig. 15 is a diagram describing a correspondence relationship between axes according to the first embodiment;
Fig. 16 is a flowchart of an analysis process of the transfer target device 30 according to the first embodiment;
Fig. 17 is a diagram describing a transfer source determination process using the learning model search system 100 according to the first embodiment;
Fig. 18 is a flowchart of the analysis process of the transfer target device 30 when there are two or more transfer source devices 20 to be candidates for a transfer source;
Fig. 19 is a diagram describing an example of two-dimensional images according to the first embodiment;
Fig. 20 is a flowchart of the similarity judgment process according to a second embodiment;
Fig. 21 is a flowchart of the similarity judgment process according to a third embodiment;
Fig. 22 is a diagram describing selection of a test method according to the third embodiment; and
Fig. 23 is a flowchart of the similarity judgment process according to a fourth embodiment.

**Description of Embodiments**

First Embodiment

*** Description of Configurations ***

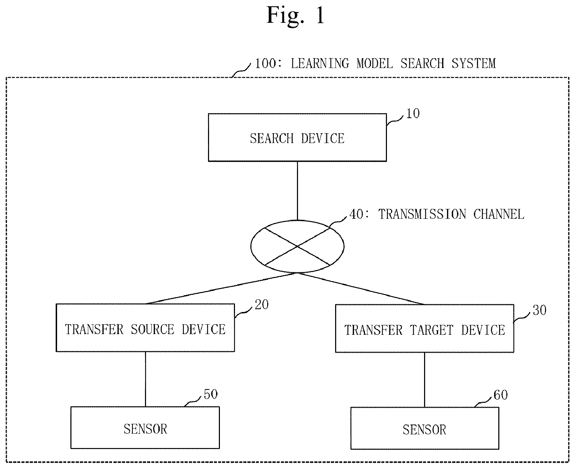

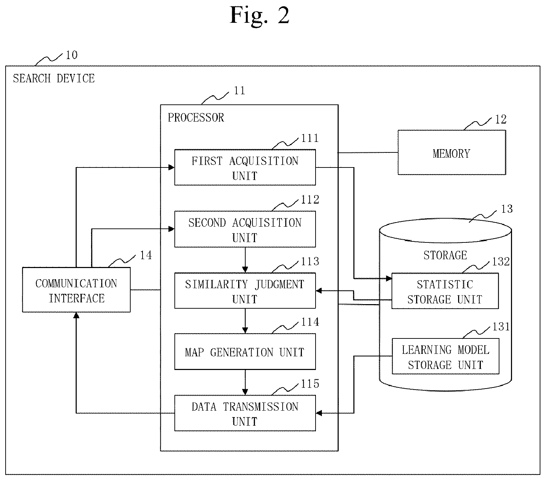

Referring to Fig. 1, a configuration of a learning model search system 100 according to a first embodiment will be described.
The learning model search system 100 includes a search device 10, at least one transfer source device 20, and a transfer target device 30. The search device 10, the transfer source device 20, and the transfer target device 30 are connected via a transmission channel 40 such as the Internet.
At least one sensor 50 is connected to each transfer source device 20. At least one sensor 60 is connected to the transfer target device 30.
Referring to Fig. 2, a configuration of the search device 10 according to the first embodiment will be described.
The search device 10 is a computer such as a server in cloud computing.
The search device 10 is a computer.
The search device 10 includes hardware of a processor 11, a memory 12, a storage 13, and a communication interface 14. The processor 11 is connected with other hardware components via signal lines and controls these other hardware components.
The search device 10 includes, as functional components, a first acquisition unit 111, a second acquisition unit 112, a similarity judgment unit 113, a map generation unit 114, and a data transmission unit 115. The functions of the functional components of the search device 10 are realized by software.

The storage 13 stores programs that realize the functions of the functional components of the search device 10. These programs are loaded into the memory 12 by the processor 11 and executed by the processor 11. This realizes the functions of the functional components of the search device 10.

The storage 13 also realizes a learning model storage unit 131 and a statistic storage unit 132.

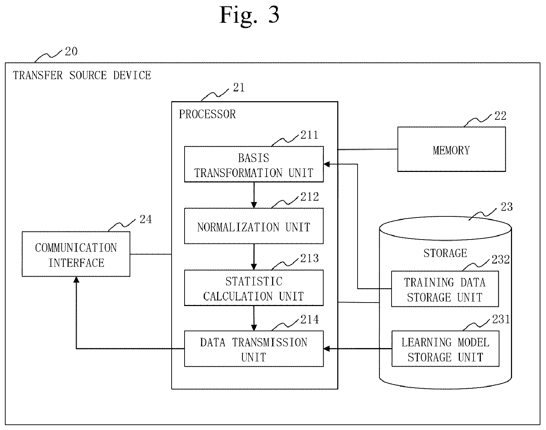

Referring to Fig. 3, a configuration of the transfer source device 20 according to the first embodiment will be described.

The transfer source device 20 is a computer such as an IoT device.

The transfer source device 20 includes hardware of a processor 21, a memory 22, a storage 23, and a communication interface 24. The processor 21 is connected with other hardware components via signal lines and controls these other hardware components.

The transfer source device 20 includes, as functional components, a basis transformation unit 211, a normalization unit 212, a statistic calculation unit 213, and a data transmission unit 214. The functions of the functional components of the transfer source device 20 are realized by software.

The storage 23 stores programs that realize the functions of the functional components of the transfer source device 20. These programs are loaded into the memory 22 by the processor 21 and executed by the processor 21. This realizes the functions of the functional components of the transfer source device 20.

The storage 23 also realizes a learning model storage unit 231 and a training data storage unit 232.

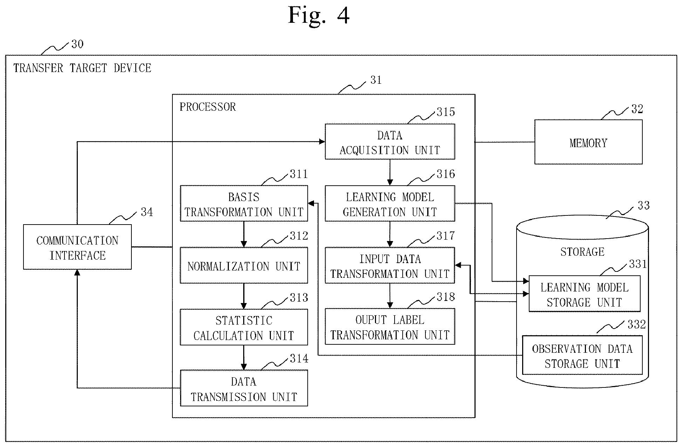

Referring to Fig. 4, a configuration of the transfer target device 30 according to the first embodiment will be described.

The transfer target device 30 is a computer such as an IoT device.

The transfer target device 30 includes hardware of a processor 31, a memory 32, a storage 33, and a communication interface 34. The processor 31 is connected with other hardware components via signal lines and controls these other hardware components.

The transfer target device 30 includes, as functional components, a basis transformation unit 311, a normalization unit 312, a statistic calculation unit 313, a data transmission unit 314, a data acquisition unit 315, a learning model generation unit 316, an input data transformation unit 317, and an output label transformation unit 318. The functions of the functional components of the transfer target device 30 are realized by software.

The storage 33 stores programs that realize the functions of the functional components of the transfer target device 30. These programs are loaded into the memory 32 by the processor 31 and executed by the processor 31. This realizes the functions of the functional components of the transfer target device 30.

The storage 33 also realizes a learning model storage unit 331 and an observation data storage unit 332.

Each of the processors 11, 21, and 31 is an integrated circuit (IC) that performs processing. Specific examples of each of the processors 11, 21, and 31 are a central processing unit (CPU), a digital signal processor (DSP), and a graphics processing unit (GPU).

Each of the memories 12, 22, and 32 is a storage device to temporarily store data. Specific examples of each of the memories 12, 22, and 32 are a static random access memory (SRAM) and a dynamic random access memory (DRAM).

Each of the storages 13, 23, and 33 is a storage device to store data. A specific example of each of the storages 13, 23, and 33 is a hard disk drive (HDD). Alternatively, each of the storages 13, 23, and 33 may be a portable recording medium such as a Secure Digital (SD, registered trademark) memory card, CompactFlash (CF, registered trademark), a NAND flash, a flexible disk, an optical disc, a compact disc, a Blu-ray (registered trademark) disc, or a digital versatile disc (DVD).

Each of the communication interfaces 14, 24, and 34 is an interface for communicating with external devices. Specific examples of each of the communication interfaces 14, 24, and 34 are an Ethernet (registered trademark) port and a High-Definition Multimedia Interface (HDMI, registered trademark) port.

\*\*\* Description of Operation \*\*\*

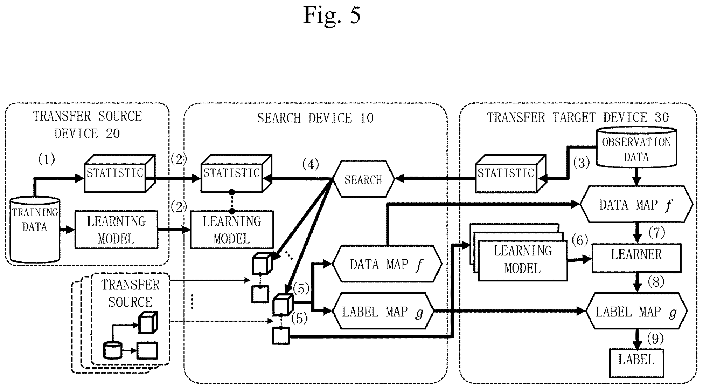

Referring to Figs. 5 to 16, operation of the learning model search system 100 according to the first embodiment will be described.

A procedure for operation of the search device 10 of the learning model search system 100 according to the first embodiment is equivalent to a search method according to the first embodiment. A program that realizes the operation of the search device 10 of the learning model search system 100 according to the first embodiment is equivalent to a search program according to the first embodiment.

Referring to Fig. 5, overall processing of the learning model search system 100 according to the first embodiment will be described.

(1) Each transfer source device 20 generates a statistic necessary for similarity comparison from training data. The training data is the data generated by assigning teaching data (labels) to data acquired by each transfer source device 20 from the sensor 50. (2) Each transfer source device 20 transmits a learning model and the statistic to the search device 10. (3) The transfer target device 30 generates a statistic necessary for similarity comparison from observation data, and transmits the statistic to the search device 10. The observation data is the data generated by assigning teaching data (labels) to data acquired by the transfer target device 30 from the sensor 60.

(4) The search device 10 judges whether the statistic generated by each transfer source device 20 and the statistic generated by the transfer target device 30 are similar. By this, the search device 10 determines the transfer source device 20 to be a candidate for the transfer source. (5) The search device 10 generates a data map f and a label map g for the transfer source device 20 to be a candidate for the transfer source. The data map f is an input transformation from the transfer target to the transfer source. The label map g is an output transformation from the transfer source to the transfer target.

(6) The transfer target device 30 takes as input the learning model of the transfer source device 20 that is the candidate for the transfer source, and generates a learner of the transfer target device 30. (7) The transfer target device 30 transforms observation data with the data map f, and then inputs the observation data into the generated learner. (8) The transfer target device 30 transforms a label output from the learner with the label map g. (9) The transfer target device 30 outputs the transformed label.

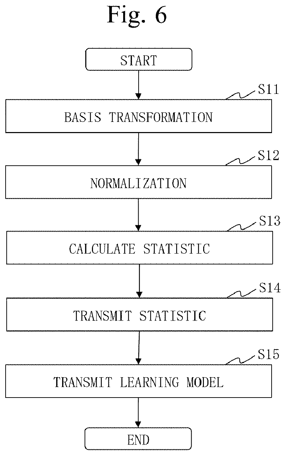

Referring to Fig. 6, a first data transmission process (corresponding to processing of (1) and (2) of Fig. 5) of the transfer source device 20 according to the first embodiment will be described.

(Step S11: Basis transformation process)

The basis transformation unit 211 transforms the coordinate system of feature vectors of training data stored in the training data storage unit 232. The feature vectors of the training data are data obtained by excluding labels from the training data. This process is the process of matching the coordinate systems in order to compare a distribution of feature vectors of the training data of the transfer source device 20 and a distribution of feature vectors of observation data of the transfer target device 30.

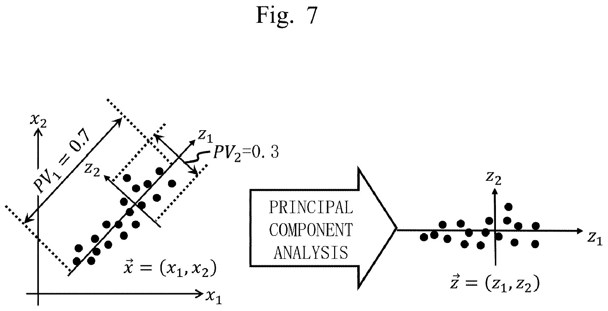

Specifically, the basis transformation unit 211 performs a basis transformation on the feature vectors based on information content on each feature axis. As illustrated in Fig. 7, the basis transformation unit 211 uses principal component analysis to sequentially assign elements zi of a vector $\vec{z}$ to feature axes, starting with a feature axis of an element of the feature vector with the largest information content, so as to obtain an orthonormal basis. Note that the term "information content" can be replaced with "variance value" or "eigenvalue". In Fig. 7, an element zi of the basis is assigned to a feature axis with the largest information content, and an element $z_2$ is assigned to a feature axis with the second largest information content. That is, the basis transformation unit 211 transforms a feature vector $\vec{x}$ on a p-dimensional Euclidean space $R^p$ into the vector $\vec{z}$ on an m-dimensional principal component space $Z^m$.

The i-th principal component of the vector $\vec{z}$ is denoted as an element zi, a contribution rate of the element $z_i$ is denoted as PVi, and a cumulative contribution rate is denoted as $CPV_m$. As a result of this transformation, the principal components are uncorrelated with each other. When it is assumed that the number of dimensions of the vector $\vec{z}$ is m, $1 \le m \le p$ and $0 < CPV_m \le 1$ are satisfied. In particular, when m < p, this is called dimensionality reduction. By the principal component analysis, the axes of the feature vector spaces of the transfer source device 20 and the transfer target device 30 are sorted in descending of contribution rates.

(Step S12: Normalization process)

The normalization unit 212 transforms the vector $\vec{z}$ whose coordinate system has been transformed in step S11 such that the domain is within a certain range. This process is the process of normalizing feature vectors in order to compare the distribution of feature vectors of the training data of the transfer source device 20 with the distribution of feature vectors of the observation data of the transfer target device 30 regardless of scale.

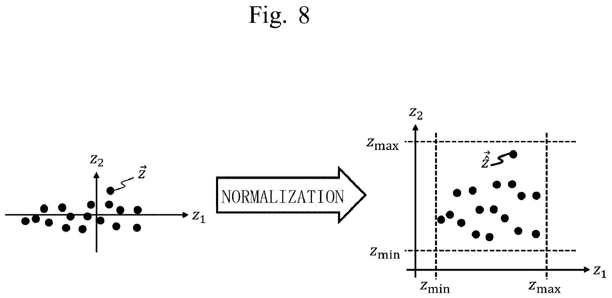

Specifically, as illustrated in Fig. 8, the normalization unit 212 performs normalization by Formula 1 such that the scale of the element z i of the vector $\vec{z}$ is $z_{min} \le z_i \le z_{max}$. A vector resulting from normalizing the vector $\vec{z}$ is denoted as $\vec{z^\wedge}$.

[Formula 1]

$$\widehat{z}_i = \mathcal{C}(z_i, z_{\min}, z_{\max})$$

$$s.t.\ \mathcal{C}(x, C_{\min}, C_{\max}) = \frac{x - \min(x)}{\max(x) - \min(x)} (C_{\max} - C_{\min}) + C_{\min}$$

(Step S13: Statistic calculation process)

The statistic calculation unit 213 calculates a statistic for the data transformed in step S12. This process is the process of calculating a statistic to be used for comparing the distribution of feature vectors of the training data of the transfer source device 20 with the distribution of feature vectors of the observation data of the transfer target device 30.

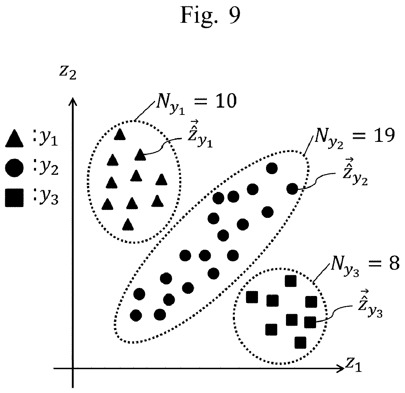

Specifically, the statistic calculation unit 213 first creates a two-dimensional image of the normalized vector $z^{\wedge\rightarrow}$. As illustrated in Fig. 9, the statistic calculation unit 213 executes this process for the normalized vectors $z^{\wedge\rightarrow}$ for each label $y_k$. There are data visualization (dimensionality reduction) techniques such as multidimensional scaling (MDS), a self-organizing map (SOM), and t-distributed stochastic neighbor embedding (t-SNE). However, if the number of sets of data is changed, the appearance of an output image may differ significantly. In this case, it may not be possible to judge a similarity properly.

Thus, the statistic calculation unit 213 creates a two-dimensional image of the normalized vector $z^{\wedge\rightarrow}$ by the following procedure. It is assumed that the normalized vector $z^{\wedge\rightarrow}$ has been normalized with $z_{\min} = 0$ and $z_{\max} = 255$.

First, as indicated in Formula 2, the statistic calculation unit 213 calculates a ceiling function of a normalized vector $z^{\wedge\rightarrow}_{y\_k}$ to quantize it to 8 bits, where y_k means $y_k$. In the following, i_j likewise means $i_j$, which is i to which j is attached as a subscript.

[Formula 2]

$$\left\lceil \vec{\hat{z}}_{y_k} \right\rceil$$

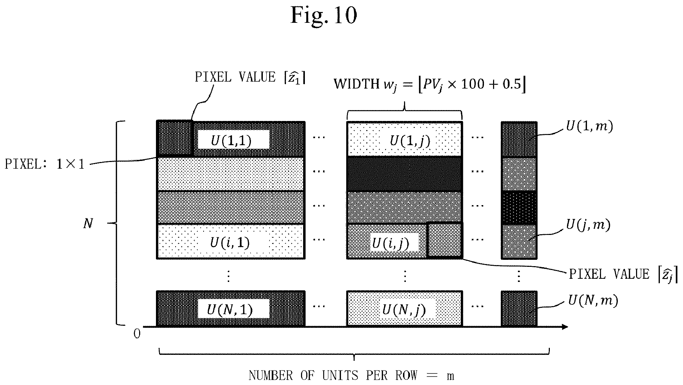

Then, the statistic calculation unit 213 transforms the quantized data into a grayscale image weighted by the contribution rate PV. The grayscale image is composed of a set of small areas called units U. A unit in row i and column j is denoted as U(i, j). As illustrated in Fig. 10, the pixel value of unit U(i, j) is the value obtained by calculating the ceiling function of an element $z^{\wedge}_j$ of the normalized vector $z^{\wedge\rightarrow}$ as indicated in Formula 3, the height is 1, and the value of a width $w_j$ is as indicated in Formula 4.

[Formula 3]

$$\left\lceil \widehat{z}_j \right\rceil$$

[Formula 4]

$$w_j = \begin{cases} \left\lfloor PV_j \times 100 + 0.5 \right\rfloor & , w_j > 0 \\ 1 & , w_j \leq 0 \end{cases}$$

In the following, the pixel value in row i and column j of the grayscale image is denoted as $g_{i,j} \in G$ ($1 \leq i \leq N$, $1 \leq j \leq \Sigma_{j=1}^m w_j$). As indicated in Fig. 9, N is the number of feature vectors of each label. In Fig. 9, for example, $N_{y\_1}$ is the number of feature vectors of label $y_1$, so that it is 10.

Then, the statistic calculation unit 213 calculates a histogram for each label to facilitate judgment as to whether sets G of pixel values of the transfer source device 20 and the transfer target device 30 are similar. However, a histogram generated from feature vectors may not reflect the characteristics of the original population. Thus, the statistic calculation unit 213 estimates a probability density function of the population. A kernel density estimator $f^{\wedge}_h(x)$ is defined by Formula 5, using the set G as a sample of the population.

[Formula 5]

$$\hat{f}_h(x) = \frac{1}{|\mathbb{G}|h} \sum_{g_{i,j} \in \mathbb{G}} K\left(\frac{x - g_{i,j}}{h}\right)$$

In Formula 5, $|G|$ is the number of pixels, h is a bandwidth, which is a smoothing parameter, and K is a kernel function.

The statistic calculation unit 213 sets a set of kernel density estimators $f^{\wedge}_h(x)$ respectively calculated for labels, as first data representing a statistic to be used for similarity judgment.

(Step S14: Statistic transmission process)

The data transmission unit 214 transmits, to the search device 10, the correspondence relationship between the axes in the data before and the data after the transformation of the coordinate system in step S11, the minimum value $_{min}(x_i)$ and the maximum value $_{max}(x_i)$ of each axis i before the normalization in step S12, and the first data representing the statistic calculated in step S13. Then, the first acquisition unit 111 of the search device 10 acquires the correspondence relationship between the axes, the minimum value $_{min}(x_i)$, the maximum value $_{max}(x_i)$, and the first data that have been transmitted, and writes them in the statistic storage unit 132.

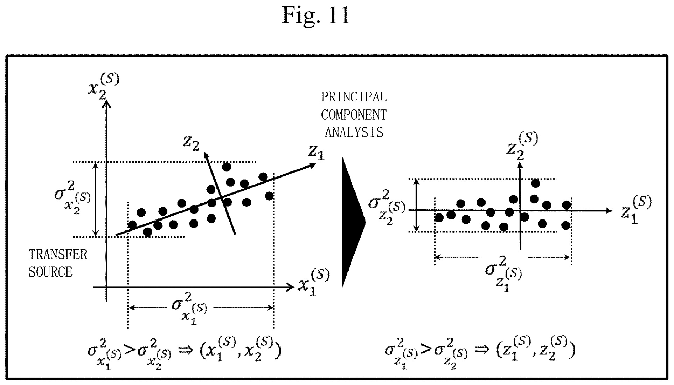

As illustrated in Fig. 11, the correspondence relationship between the axes is identified based on a magnitude relationship between the axes. In the case of Fig. 11, the correspondence relationship between the axes is expressed as indicated in Formula 6.

[Formula 6]

$$\left(z_1^{(S)}, z_2^{(S)}\right) \leftrightarrow \left(x_1^{(S)}, x_2^{(S)}\right)$$

(Step S15: Learning model transmission process)

The data transmission unit 214 retrieves, from the learning model storage unit 231, a learning model generated based on the training data stored in the training data storage unit 232, and transmits the learning model to the search device 10. Then, the first acquisition unit 111 of the search device 10 writes the transmitted learning model in the learning model storage unit 131 in association with the first data transmitted in step S14.

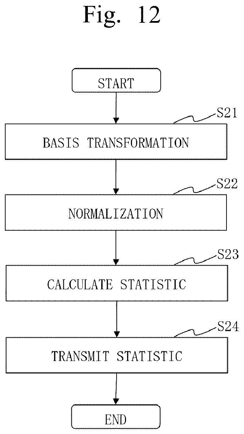

Referring to Fig. 12, a second data transmission process (corresponding to processing of (3) of Fig. 5) of the transfer target device 30 according to the first embodiment will be described.

(Step S21: Basis transformation process)

The basis transformation unit 311 transforms the coordinate system of feature vectors of the observation data stored in the observation data storage unit 332. The method for transforming the coordinate system is the same as in step S11 of Fig. 6.

(Step S22: Normalization process)

The normalization unit 312 transforms the vector $z^{\rightarrow}$ whose coordinate system has been transformed in step S21 such that the domain is within a certain range. The data transformation method is the same as in step S12 of Fig. 6. The normalization unit 312 uses the same domain (the minimum value $z_{min}$ and the maximum value $z_{max}$) as that in step S12 of Fig. 6.

(Step S23: Statistic calculation process)

The statistic calculation unit 313 calculates a statistic for the data transformed in step S22. The statistic calculation method is the same as in step S13 of Fig. 6. The statistic calculation unit 313 sets a set of kernel density estimators $\hat{f}_h(x)$ respectively calculated for labels, as second data representing a statistic to be used for similarity judgment.

(Step S24: Statistic transmission process)

The data transmission unit 314 transmits, to the search device 10, the correspondence relationship between the axes in the data before and the data after the transformation of the coordinate system in step S21, the minimum value $_{min}(x_i)$ and the maximum value $_{max}(x_i)$ of each axis i before the normalization in step S22, and the second data representing the statistic calculated in step S23. Then, the second acquisition unit 112 of the search device 10 acquires the correspondence relationship between the axes, the minimum value $_{min}(x_i)$, the maximum value $_{max}(x_i)$, and the second data that have been transmitted, and writes them in the memory 12.

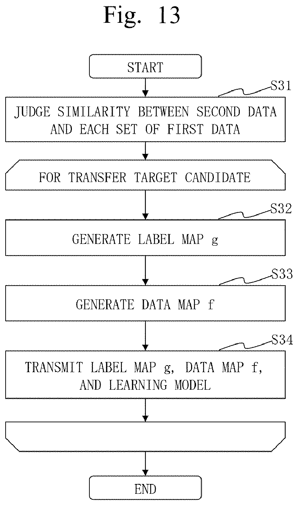

Referring to Fig. 13, a search process (corresponding to processing of (4) and (5) of Fig. 5) of the search device 10 according to the first embodiment will be described.

(Step S31: Similarity judgment process)

The similarity judgment unit 113 treats each set of the first data acquired by the first acquisition unit 111 from one or more transfer source devices 20 as subject first data, and judges whether the subject first data and the second data acquired by the second acquisition unit 112 are similar. That is, the similarity judgment unit 113 judges whether the set of kernel density estimators $\hat{f}_h^{(S)}(x)$, which is the first data, and the set of kernel density estimators $\hat{f}_h^{(T)}(x)$, which is the second data, are similar.

Note that the superscripts (S) and (T) are information for distinguishing the transfer source device 20 and the transfer target device 30, and (S) represents the transfer source device 20 and (T) represents the transfer target device 30.

Specifically, the similarity judgment unit 113 performs similarity comparison between the set of kernel density estimators $\hat{f}_h^{(S)}(x)$ and the set of kernel density estimators $\hat{f}_h^{(T)}(x)$, using a Pearson correlation coefficient. Non-patent literature "Masashi Sugiyama, Makoto Yamada, Marthinus Christoffel du Plessis, and Song Liu, "Learning under Non-Stationarity: Covariate Shift Adaptation, Class-Balance Change Adaptation, and Change Detection, Nihon Tokei Gakkai Shi, vol.44, no.1, pp.113-136 (2014)" describes methods for similarity evaluation using the Kullback-Leibler distance, the Pearson distance, and the $L^2$ distance. However, in the case of transfer in IoT, it is considered that there are many situations where the number of sets of data in a transfer target is smaller than the number of sets of data in a transfer source ($N_{y\_i}^{(T)} < N_{y\_j}^{(S)}$). This causes a difference in distributions of appearance frequencies of pixel values, so that a similarity cannot be judged properly with the above distances. Thus, the similarity judgment unit 113 focuses attention on an increase/decrease relationship between the two sets of data, and uses the Pearson correlation coefficient. That is, the similarity judgment unit 113 judges whether the first data and the second data are similar based on a similarity in terms of the increase/decrease relationship between the subject first data and the second data.

First, the similarity judgment unit 113 performs a Pearson test of no correlation so as to test whether there is correlation between the subject first data and the second data. If it is judged that uncorrelatedness is ruled out as a result of the test, the similarity judgment unit 113 treats the Pearson correlation coefficient as a similarity degree, as indicated in Formula 7. If uncorrelatedness cannot be asserted (the null hypothesis cannot be rejected) as a result of the test, the similarity judgment unit 113 defines the similarity degree as 0. For samples to be used for the Pearson test of no correlation and the calculation of the correlation coefficient, the width of a bin of the histogram is sufficient, so that values of the kernel density estimator $\hat{f}_h^{(T)}(x)$ and the kernel density estimator $\hat{f}_h^{(S)}(x)$ when 1 ,..., 255 are substituted for x are used.

[Formula 7]

$$score_{\left(y_k^{(T)}, y_l^{(S)}\right)} = pearsonr\left(\hat{f}_h^{(T)}(x)_{y_k}, \hat{f}_h^{(S)}(x)_{y_l}\right)$$

In Formula 7, $\hat{f}_h^{(T)}(x)$ corresponding to label $y_k$ is denoted as $\hat{f}_h^{(T)}(x)_{y\_k}$, and $\hat{f}_h^{(S)}(x)$ corresponding to label $y_1$ is denoted as $\hat{f}_h^{(T)}(x)_{y\_1}$. It is assumed that the highest score $(y_k^{(T)}, y_1^{(S)})$ is obtained with label $y_1^{(S)}$ corresponding to label $y_k^{(T)}$.

Specifically, if it is judged as a result of the test that uncorrelatedness is ruled out, the similarity judgment unit 113 sequentially identifies label $y_1^{(S)}$ in the first data having a high correlation coefficient with each label $y_k^{(T)}$ in the second data, while changing the search start point of label $y_k^{(T)}$ in the second data. By this, the similarity judgment unit 113 identifies label $y_1^{(S)}$ in the first data corresponding to each label $y_k^{(T)}$ in the second data. Then, with regard to the subject first data and the second data, the similarity judgment unit 113 treats the maximum correlation coefficient between the corresponding label yi and label $y_k$ as a similarity degree between the subject first data and the second data. The similarity judgment unit 113 may treat the mean value or total value of correlation coefficients between the corresponding labels yi and labels $y_k$ as the similarity degree between the subject first data and the second data.

The similarity judgment unit 113 only treats each transfer source device 20 from which the first data with a similarity degree higher than a threshold T is acquired as a candidate for the transfer source. Alternatively, the similarity judgment unit 113 sorts sets of the first data in descending order of similarity degrees, and treats only the transfer source devices 20 that are sources of a reference number of sets of the first data with high similarity degrees as candidates for the transfer source. By this, the similarity judgment unit 113 narrows down the transfer source devices 20 to be candidates for the transfer source.

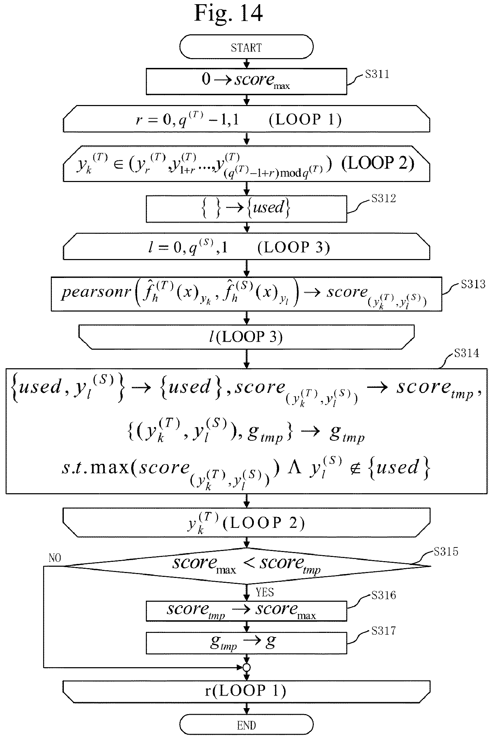

Referring to Fig. 14, the similarity degree calculation process when it is judged that uncorrelatedness is ruled out according to the first embodiment will be described.

In step S311, the similarity judgment unit 113 sets 0 in score$_{max}$ as an initial value.

In loop 1, the similarity judgment unit 113 executes processing of step S312 to step S317 repeatedly, while incrementing a variable r by one from 0 to $q(T)-1$, where $q(T)$ is the number of types of labels $y^{(T)}$ in the transfer target device 30. That is, there are $q(T)$ types of labels $y^{(T)}$, which are $\{y0^{(T)}, ..., y_{q(T)-1}^{(T)}\}$, in the transfer target device 30. In loop 2, the similarity judgment unit 113 executes processing of step S312 to step S314 repeatedly in the order of $y_r^{(T)}$, $y_{1+r}^{(T)}, ..., y_{(q(T)-1+r)modq(T)}^{(T)}$, where the subscript $q(T)$ means $q(T)$. That is, this means that in loop 1 and loop 2, the search order is $y_r^{(T)}$, $y_{1+r}^{(T)}, ..., y_{(q(T)-1+r)modq(T)}^{(T)}$ and a search is performed by incrementing the variable r, which represents the search start point, by one from 0 to $q(T)-1$.

In step S312, the similarity judgment unit 113 sets an empty set in a set "used", which is a set of used labels, as an initial value.

In loop 3, the similarity judgment unit 113 executes processing of step S313 repeatedly, while incrementing a variable 1 by one from 0 to $q^{(S)}$. In step S313, the similarity judgment unit 113 calculates the Pearson correlation coefficient between label $y_k^{(T)}$ of the second data and label $y_1^{(S)}$ of the subject first data, and sets it in score($y_k^{(T)}$, $y_1^{(S)}$).

In step S314, the similarity judgment unit 113 sets label $y_1^{(S)}$ with the maximum score($y_k^{(T)}$, $y_1^{(S)}$) out of labels $y_1^{(S)}$ not included in the set "used" as a subject label $y_1^{(S)}$. The similarity judgment unit 113 adds the subject label $y_1^{(S)}$ to the set "used". The similarity judgment unit 113 sets score($y_k^{(T)}$, $y_1^{(S)}$) between the label $y_k^{(T)}$ being processed and the subject label $y_1^{(S)}$ in score$_{tmp}$. The similarity judgment unit 113 adds a combination ($y_k^{(T)}$, $y_1^{(S)}$) of the label $y_k^{(T)}$ being processed and the subject label $y_1^{(S)}$ to a set gtmp.

By executing the processing of loop 2 and loop 3, each label $y_1^{(S)}$ corresponding to each label $y_k^{(T)}$ is identified in descending order of correlation coefficients in the search order that is set in loop 1. Then, the highest correlation coefficient out of correlation coefficients between each label $y_k^{(T)}$ and the corresponding label $y_1^{(S)}$ is set in score$_{tmp}$. The combination of each label $y_k^{(T)}$ and the corresponding label $y_1^{(S)}$ is set in the set g$_{tmp}$.

In step S315, the similarity judgment unit 113 judges whether score$_{tmp}$ is higher than score$_{max}$. The similarity judgment unit 113 advances the processing to step S316 if score$_{tmp}$ is higher than score$_{max}$, and advances the processing to a point after step S317 if score$_{tmp}$ is not higher than score$_{max}$.

In step S316, the similarity judgment unit 113 sets score$_{tmp}$ in score$_{max}$. In step S317, the similarity judgment unit 113 sets the set gtmp in a set g.

By executing the processing of loop 1 to loop 3, the highest correlation coefficient score$_{tmp}$ out of the correlation coefficients score$_{tmp}$ identified in all loops in the search is set in the correlation coefficient score$_{max}$. This correlation coefficient score$_{max}$ is treated as the similarity degree between the subject first data and the second data. Each combination of label $y_k^{(T)}$ and its corresponding label $y_1^{(S)}$ identified in each loop in the search in which the correlation coefficient score$_{max}$ is calculated is set in the set g.

Processes of step S32 to step S34 are executed using, as the subject first data, each set of the first data acquired from each of the transfer source devices 20 to be candidates for the transfer source narrowed down in step S31.

(Step S32: Label map generation process)

The map generation unit 114 generates a label map g that indicates a correspondence relationship between labels in the training data from which the subject first data is derived and labels in the observation data from which the second data is derived.

Specifically, the map generation unit 114 generates, as the label map g, the set g indicating each label $y_1^{(S)}$ corresponding to each label $y_k^{(T)}$ identified in step S31.

(Step S33: Data map generation process)

The map generation unit 114 generates a data map f that indicates a correspondence relationship between the feature vectors of the training data from which the subject first data is derived and the feature vectors of the observation data from which the second data is derived.

Specifically, the map generation unit 114 first identifies a correspondence relationship between the feature vectors of the training data from which the subject first data is derived and the feature vectors of the observation data from which the second data is derived based on the correspondence relationship between the axes acquired together with the subject first data and the correspondence relationship between the axes acquired together with the second data. The correspondence relationship between the feature vectors of the training data from which the subject first data is derived and the feature vectors of the observation data from which the second data is derived is identified by identifying the correspondence relationship in the order of the original coordinate system of the transfer target device 30 → the coordinate system of the transfer target device 30 after the basis transformation → the coordinate system of the transfer source device 20 after the basis transformation → the original coordinate system of the transfer source device 20.

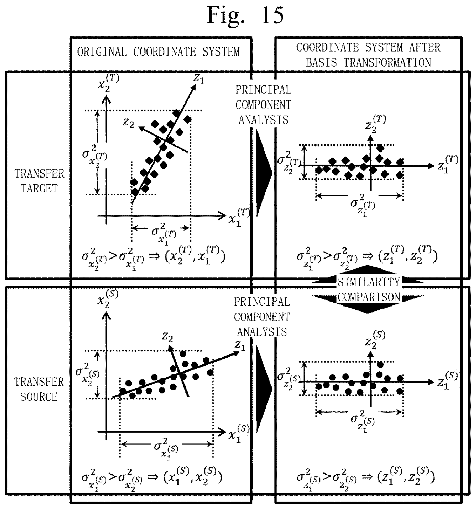

As a specific example, as illustrated in Fig. 15, it is assumed that the correspondence relationship between the axes acquired together with the subject first data is the relationship indicated in Formula 8 and the correspondence relationship between the axes acquired together with the second data is the relationship indicated in Formula 9. As illustrated in Fig. 15, it is assumed that the correspondence relationship between data of the feature vectors of the training data from which the subject first data is derived after the basis transformation and data of the feature vectors of the observation data from which the second data is derived after the basis transformation is the relationship indicated in Formula 10.

[Formula 8]

$$\left(z_1^{(S)}, z_2^{(S)}\right) \leftrightarrow \left(x_1^{(S)}, x_2^{(S)}\right)$$

[Formula 9]

$$\left(x_2^{(T)}, x_1^{(T)}\right) \leftrightarrow \left(z_1^{(T)}, z_2^{(T)}\right)$$

[Formula 10]

$$\left(z_1^{(T)}, z_2^{(T)}\right) \leftrightarrow \left(z_1^{(S)}, z_2^{(S)}\right)$$

In this case, a correspondence relationship R between the feature vectors of the training data from which the subject first data is derived and the feature vectors of the observation data from which the second data is derived is as indicated in Formula 11.

[Formula 11]

$$\left(x_2^{(T)}, x_1^{(T)}\right) \leftrightarrow \left(z_1^{(T)}, z_2^{(T)}\right) \leftrightarrow \left(z_1^{(S)}, z_2^{(S)}\right) \leftrightarrow \left(x_1^{(S)}, x_2^{(S)}\right)$$

$$\Rightarrow \left(x_2^{(T)}, x_1^{(T)}\right) \leftrightarrow \left(x_1^{(S)}, x_2^{(S)}\right)$$

When this correspondence relationship is expressed as R(i) = j, then R(2) = 1 and R(1) = 2 in the case of Fig. 15, where a variable i is the index of the axis of the transfer target device 30 (1 in $x_1^{(T)}$), and a variable j is the index of the axis of the transfer source device 20 (2 in $x_2^{(S)}$).

Then, the map generation unit 114 generates the data map f, as indicated in Formula 12, based on the identified correspondence relationship R, the minimum value $_{min}(x_i^{(S)})$ and maximum value $_{max}(x_i^{(S)})$ of each axis i acquired together with the subject first data, and the minimum value $_{min}(x_i^{(T)})$ and maximum value $_{max}(x_i^{(T)})$ of each axis i acquired together with the second data.

[Formula 12]

$$f = \begin{cases} \mathcal{D}\left(x_i^{(T)}\right) = \mathcal{C}\left(x_i^{(T)}, \min\left(x_i^{(S)}\right), \max\left(x_i^{(S)}\right)\right); \\ \mathcal{R}(i) = j \end{cases}$$

$$\left(x_1^{(T)}, \dots, x_{p^{(T)}}^{(T)}\right) \rightarrow \left(\mathcal{D}(x_{\mathcal{R}(1)}^{(T)}), \dots, \mathcal{D}(x_{\mathcal{R}(p^{(T)})}^{(T)})\right)$$

In Formula 12, $p^{(T)}$ is the number of dimensions of the feature vector $\vec{x}$ of the observation data from which the second data is derived. C is as defined in Formula 1.

(Step S34: Data transmission process)

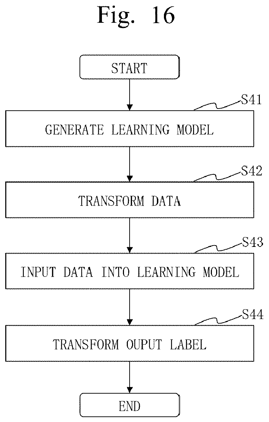

The data transmission unit 115 transmits, to the transfer target device 30, the label map g generated for the subject first data in step S32, the data map f generated for the subject first data in step S33, and the learning model acquired from the transfer source device 20 from which the subject first data has been acquired.
Then, the data acquisition unit 315 acquires the label map g, the data map f, and the learning model. The data acquisition unit 315 sets the label map g in the output label transformation unit 318, sets the data map f in the input data transformation unit 317, and writes the learning model in the learning model storage unit 331.
Referring to Fig. 16, an analysis process (corresponding to processing of (6) to (9) in Fig. 5) of the transfer target device 30 according to the first embodiment will be described.
A case in which there is one transfer source device 20 to be a candidate for the transfer source as a result of narrowing down in step S31 will be described.

(Step S41: Learning model generation process)

The learning model generation unit 316 generates a learning model for the transfer target device 30. Since there is only one transfer source device 20 to be a candidate for the transfer source, the learning model generation unit 316 directly sets the learning model acquired in step S34 as the learning model for the transfer target device 30.

(Step S42: Data transformation process)

The input data transformation unit 317 transforms observation data acquired from the sensor 60 with the data map f set in step S34. By this, the input data transformation unit 317 matches the format of the observation data with the data format of the transfer source device 20 that is the candidate for the transfer source. That is, the format of the observation data is transformed into the input format of the learning model acquired from the transfer source device 20.
As a specific example, it is assumed that the relationship between the observation data of the transfer target device 30 and each axis is the relationship illustrated in Fig. 15. In this case, the input data transformation unit 317 interchanges the $x_1^{(T)}$ axis with the $x_2^{(T)}$ axis and interchanges the $x_2^{(T)}$ axis with the $x_1^{(T)}$ axis in accordance with the correspondence relationship R indicated in Formula 11, and then performs scale transformation, as indicated in Formula 13.

[Formula 13]

$$\left(x_1^{(T)}, x_2^{(T)}\right) \rightarrow \left(\mathcal{D}(x_2^{(T)}), \mathcal{D}(x_1^{(T)})\right)$$

$$\text{s.t. } \mathcal{R}(1) = 2, \mathcal{R}(2) = 1$$

(Step S43: Data input process)

The input data transformation unit 317 inputs the observation data transformed in step S42 into the learning model generated in step S41. Then, an output label is output as a result of inference in the learning model.

(Step S44: Output label transformation process)

The output label transformation unit 318 transforms the output label output in step S43 with the label map g set in step S34. By this, the output label transformation unit 318 transforms the output label into a label of the transfer target device 30. Then, the output label transformation unit 318 outputs the transformed output label as a result of inference from the observation data.

As a specific example, it is assumed that the label map g is expressed by $\{(y_k^{(T)}, y_1^{(S)})\}$ and the label map g is { (apple, car), (orange, motorbike), (banana, bicycle)}. In this case, if the output label output in step S43 is motorbike, motorbike is transformed into orange.

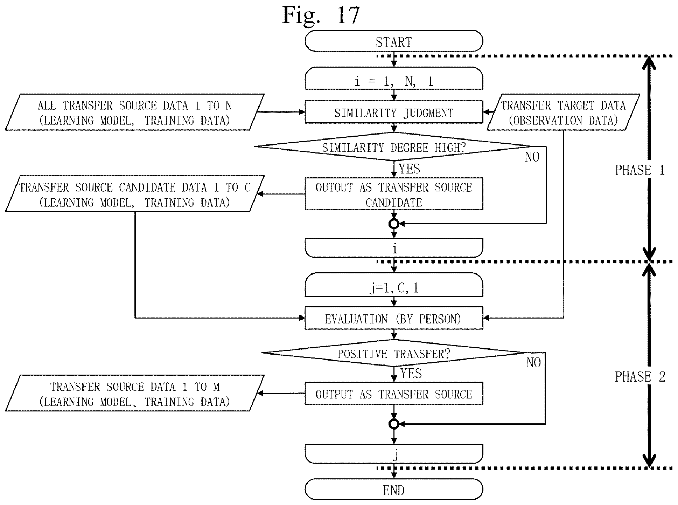

That is, as illustrated in Fig. 17, the learning model search system 100 according to the first embodiment judges similarities between the training data used by each transfer source device 20 in generating the learning model and a small number of sets of observation data obtained by the transfer target device 30, so as to narrow down the transfer source devices 20 to be candidates for the transfer target (phase 1). Then, the transfer source device 20 to be adopted as the transfer source is automatically or manually extracted out of the transfer source devices 20 to be candidates for the transfer source (phase 2).

*** Effects of First Embodiment ***

As described above, the learning model search system 100 according to the first embodiment narrows down the transfer source devices 20 to be candidates for the transfer source, based on a statistic generated from training data of each transfer source device 20 and a statistic generated from observation data of the transfer target device 30. This allows an appropriate transfer source to be determined in a short processing time. As a result, a learning model for the transfer target device 30 can be generated in a short processing time.

In particular, the learning model search system 100 according to the first embodiment narrows down the transfer source devices 20 to be candidates for the transfer source by judging whether sets of data, respectively obtained by performing a basis transformation on feature vectors of training data and feature vectors of observation data based on information content on each feature axis, are similar. The process of judging whether sets of data are similar takes less processing time compared with the process of attempting learning using training data of a transfer source. Therefore, an appropriate transfer source can be determined in a short processing time.

The learning model search system 100 according to the first embodiment narrows down the transfer source devices 20 to be candidates for the transfer source by judging whether sets of data, obtained by normalizing the scale of the feature vectors after the basis transformation of the feature vectors, are similar. This causes the sets of data to be compared without being affected by the scale of data, so that an appropriate judgment can be made.

The learning model search system 100 according to the first embodiment judges whether sets of data are similar based on a similarity in terms of the increase/decrease relationship between the sets of data. This allows an appropriate judgment to be made even in a situation where the number of sets of data in the transfer target is smaller than the number of sets of data in the transfer source.

The statistic used by the learning model search system 100 according to the first embodiment for judging whether sets of data are similar is the kernel density estimator $\hat{f}_h(x)$ and x = 1, ..., 255 are always used in calculating the Pearson correlation coefficient. Therefore, it is possible to keep the amount of calculation constant without depending on the number of sets of training data of the transfer source device 20.

In the learning model search system 100 according to the first embodiment, only the first data and the second data, which are statistics, and the learning model of the transfer source device 20 are supplied to the search device 10. Therefore, even in a case where, for example, the search device 10 is realized by a server in cloud computing, training data of the transfer source device 20 will not be inferred by the search device 10, resulting in high security.

*** Other Configurations ***

<First Variation>

In the first embodiment, with regard to the analysis process of the transfer target device 30, the case where there is one transfer source device 20 to be a candidate for the transfer source as a result of narrowing down in step S31 has been described. However, there may be a case where there are two or more transfer source devices 20 to be candidates for the transfer source as a result of narrowing down in step S31.

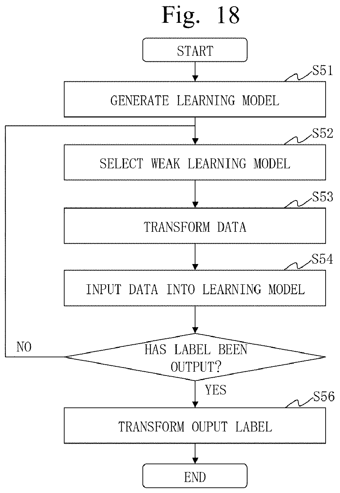

Referring to Fig. 18, the analysis process of the transfer target device 30 in the case where there are two or more transfer source devices 20 to be candidates for the transfer source as a result of narrowing down in step S31 will be described.

The process based on the concept of a one-versus-the-rest classifier will be described here.

(Step S51: Learning model generation process)

The learning model generation unit 316 generates, as weak learning models, leaning models respectively acquired from the transfer source devices 20 to be candidates for the transfer source. Then, the learning model generation unit 316 generates a combination of the weak learning models as a learning model for the transfer target device 30.

That is, it is considered that the learning model acquired from each of the transfer source devices 20 can identify some but not all labels of the transfer target device 30. Thus, the learning model generation unit 316 treats the learning model acquired from each of the transfer source devices 20 as a weak learning model, and sets the combination of the weak learning models as the learning model for the transfer target device 30.

(Step S52: Learning model selection process)

The input data transformation unit 317 selects, as a subject weak learning model, a weak learning model that has not been selected out of the weak learning models constituting the learning model for the transfer target device 30 set in step S51.

If there is no weak learning model that has not been selected, the input data transformation unit 317 determines that observation data cannot be classified.

(Step S53: Input data transformation process)

The input data transformation unit 317 transforms the observation data acquired from the sensor 60 with the data map f for the transfer source device 20 from which the weak learning model selected in step S52 has been acquired.

(Step S54: Data input process)

The input data transformation unit 317 inputs the observation data transformed in step S53 into the weak learning model selected in step S52. Then, an output label or a result indicating that inference is not possible is output as a result of inference in the learning model.

(Step S55: Output judgment process)

The input data transformation unit 317 judges whether an output label has been output in step S54.

If the output label is output, the input data transformation unit 317 advances the processing to step S56. If the result indicating that inference is not possible is output, the input data transformation unit 317 returns the processing to step S52 and selects another weak learning model.

(Step S56: Output label transformation process)

The output label transformation unit 318 transforms the output label output in step S54 with the label map g for the transfer source device 20 from which the weak learning model selected in step S52 has been acquired.

The above process is based on the concept of a one-versus-the-rest classifier. However, this is not limiting and a process based on the concept of a one-versus-one classifier or error correcting output codes may also be used.

<Second Variation>

In the first embodiment, the transfer source devices 20 to be candidates for the transfer source are narrowed down by the method of judging whether a similarity degree is higher than a threshold, for example. However, a person may finally judge whether a transfer source device is to be a candidate for the transfer source. In this case, the search device 10 may display the image data obtained by creating two-dimensional images of the training data in step S13 and the image data obtained by creating two-dimensional images of the observation data in step S23. Then, a person may visually compare these sets of image data obtained by creating two-dimensional images to judge whether they are similar.

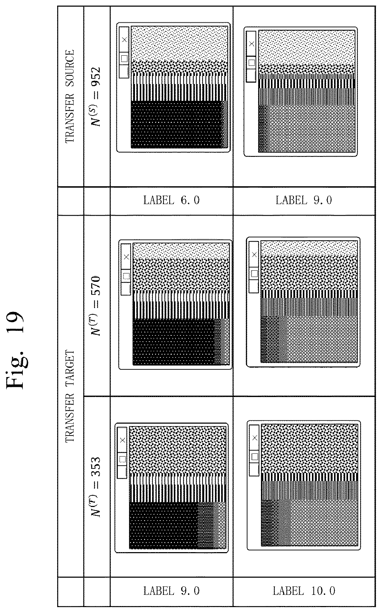

Since this is comparison between the sets of image data obtained by creating two-dimensional images, it can be easily performed by a person. For example, sets of image data obtained by creating two-dimensional images as illustrated in Fig. 19 are obtained. In Fig. 19, it can be seen that label 9.0 of the transfer target device 30 and label 6.0 of the transfer source device 20 are similar, and label 10.0 of the transfer target device 30 and label 9.0 of the transfer source device 20 are similar.

<Third Variation>

In the first embodiment, the Pearson correlation coefficient is used for comparing statistics. However, an image identification technique may be used for comparing statistics. As a specific example, the similarity judgment unit 113 extracts feature points from each of image data obtained by creating two-dimensional images of training data and image data obtained by creating two-dimensional images of observation data. Then, it is conceivable that the similarity judgment unit 113 compares the distance between feature points in the image data obtained by creating two-dimensional images of the training data with the distance between feature points in the image data obtained by creating two-dimensional images of the observation data.

<Fourth Variation>

In the first embodiment, the transfer source device 20 generates first data, and then transmits the first data to the search device 10. However, the transfer source device 20 may transmit training data to the search device 10, and the search device 10 may generate the first data. In this case, it may be arranged that the search device 10 includes the functional components of the basis transformation unit 211, the normalization unit 212, and the statistic calculation unit 213 included in the transfer source device 20.

Similarly, in the first embodiment, the transfer target device 30 generates second data and then transmits the second data to the search device 10. However, the transfer target device 30 may transmit observation data to the search device 10, and the search device 10 may generate the second data. In this case, it may be arranged that the search device 10 includes the functional components of the basis transformation unit 311, the normalization unit 312, and the statistic calculation unit 313 included in the transfer target device 30.

When training data is transmitted to the search device 10, the training data is revealed to the search device 10. Similarly, when observation data is transmitted to the search device 10, the observation data is revealed to the search device 10. Therefore, if training data or observation data needs to be prevented from being revealed to the outside, it is desirable to adopt the configuration of the first embodiment.

<Fifth Variation>

In the first embodiment, the functional components are realized by software. As a fifth variation, however, the functional components may be realized by hardware. With regard to the fifth variation, differences from the first embodiment will be described.

When the functional components are realized by hardware, the search device 10 includes an electronic circuit 15 in place of the processor 11, the memory 12, and the storage 13. The electronic circuit 15 is a dedicated circuit that realizes the functions of the functional components, the memory 12, and the storage 13.

Similarly, when the functional components are realized by hardware, the transfer source device 20 includes an electronic circuit 25 in place of the processor 21, the memory 22, and the storage 23. The electronic circuit 25 is a dedicated circuit that realizes the functions of the functional components, the memory 22, and the storage 23.

Similarly, when the functional components are realized by hardware, the transfer target device 30 includes an electronic circuit 35 in place of the processor 31, the memory 32, and the storage 33. The electronic circuit 35 is a dedicated circuit that realizes the functions of the functional components, the memory 32, and the storage 33.

Each of the electronic circuits 15, 25, and 35 is assumed to be a single circuit, a composite circuit, a programmed processor, a parallel-programmed processor, a logic IC, a gate array (GA), an application specific integrated circuit (ASIC), or a field-programmable gate array (FPGA).

In the search device 10, the transfer source device 20, and the transfer target device 30, the functional components may be realized by one electronic circuit 15, one electronic circuit 25, and one electronic circuit 35, respectively, or the functional components may be distributed among and realized by a plurality of electronic circuits 15.

<Sixth Variation>

As a sixth variation, in each device of the search device 10, the transfer source device 20, and the transfer target device 30, some of the functional components may be realized by hardware, and the rest of the functional components may be realized by software.

Each of the processors 11, 21, 31, the memories 12, 22, 32, the storages 13, 23, 33, and the electronic circuits 15, 25, 35 is referred to as processing circuitry. That is, the functions of the functional components are realized by the processing circuitry.

Second Embodiment

A second embodiment differs from the first embodiment in that a probability density estimator for each element $z^{\wedge}_i$ of the vector $z^{\wedge\to}$ on the m-dimensional principal component space is used as a statistic, in place of image data obtained by creating a two-dimensional image. In the second embodiment, this difference will be described and description of the same aspects will be omitted.

*** Description of Operation ***

Referring to Fig. 6, the first data transmission process of the transfer source device 20 according to the second embodiment will be described.
In step S12, the normalization unit 212 normalizes the vector $z^{\to}$ with $z_{min} = 0$ and $z_{max} = 1$ to generate a vector $z^{\wedge\to}$.
In step S13, the statistic calculation unit 213 estimates a probability density function, using the kernel density estimator $f^{\wedge}_h(x)$ for each element $z^{\wedge}_i$ of the vector $z^{\wedge\to}$, as indicated in Formula 14.

[Formula 14]

$$\hat{f}_h(x) = \frac{1}{|\hat{z}_i| h} \sum_{\hat{x} \in \hat{z}_i} K\left(\frac{x - \hat{x}}{h}\right)$$

In Formula 14, $|z^{\wedge}i|$ is the total number of pieces of data on the i-th principal component axis of the vector $z^{\wedge\to}$.
Referring to Fig. 12, the second data transmission process of the transfer target device 30 according to the second embodiment will be described.
In step S22, the normalization unit 312 normalizes the vector $z^{\to}$ with $z_{min} = 0$ and $z_{max} = 1$ to generate a vector $z^{\wedge\to}$, as in step S12 of Fig. 6.
In step S23, the statistic calculation unit 313 estimates a probability density function, using the kernel density estimator $f^{\wedge}_h(x)$ for each element $z^{\wedge}_i$ of the vector $z^{\wedge\to}$, as in step S13 of Fig. 6.
Referring to Fig. 13, the search process of the search device 10 according to the second embodiment will be described.
In step S31, the similarity judgment unit 113 treats the Pearson correlation coefficient weighted by the contribution rate PVi of the element $z^{\wedge}_i$ as a similarity degree, as indicated in Formula 15. As samples to be used in the Pearson test of no correlation and the calculation of the correlation coefficient, values of the kernel density estimator $f^{\wedge(T)}_h(x)$ and the kernel density estimator $f^{\wedge}h^{(S)}(x)$ when 0, 0.001, ..., 1 are substituted for x are used.

[Formula 15]

$$score_{\left(y_k^{(T)}, y_l^{(S)}\right)}$$
$$= \sum_{i=1}^{\min(m^{(T)}, m^{(S)})} PV_i^{(T)} \times pearsonr\left(\hat{f}_h^{(T)}(x)_{y_k}, \hat{f}_h^{(S)}(x)_{y_l}\right)$$

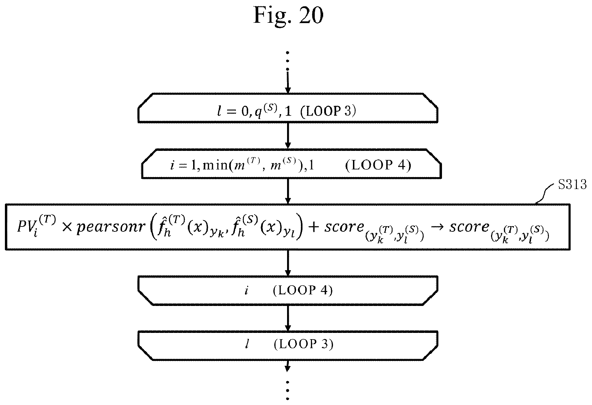

In other words, the similarity judgment unit 113 treats each feature axis as a subject feature axis, and judges whether the first data and the second data are similar by calculating a linear combination of results obtained by weighting the similarity in terms of the increase/decrease relationship (the Pearson correlation coefficient) between the first data and the second data with respect to the subject feature axis, where the weighting is performed according to the information content on the subject feature axis (weighting the similarity with the contribution rate PVi).
Referring to Fig. 20, the similarity judgment process according to the second embodiment will be described.

In the similarity judgment process, processing of loop 3 is different from the processing indicated in Fig. 14. In loop 3, processing of loop 4 is executed. In loop 4, the similarity judgment unit 113 executes processing of step S313 repeatedly, while incrementing the variable i by one from 1 to $\min(m^{(T)}, m^{(S)})$. In step S313, the similarity judgment unit 113 calculates the Pearson correlation coefficient, weighted with the contribution rate $PV_i^{(T)}$ of the element $z^{\wedge}_1$, between label $y_k^{(T)}$ of the second data and $y_1^{(S)}$ of the subject first data, and adds it to $\text{score}(y_k^{(T)}, y_1^{(S)})$.

*** Effects of Second Embodiment ***

As described above, in the learning model search system 100 according to the second embodiment, a basis transformation is performed on feature vectors to achieve uncorrelatedness, and whether the feature vectors are similar is judged by calculating a linear combination of similarities between elements of vectors. This allows the amount of calculation to be reduced compared with the first embodiment.

The learning model search system 100 according to the second embodiment weights the similarities between elements of vectors with the respective contribution rates. As a result, the greater the influence similar elements have on outputs in machine learning, the higher the similarity judged for these elements, so that an appropriate judgment can be made.

The learning model search system 100 according to the second embodiment can make an appropriate judgment by performing extrapolation (probability density estimation) between elements of vectors.

*** Other Configuration ***

<Seventh Variation>

In the second embodiment, the kernel density estimator is used for estimating the probability density function. However, an algorithm using a linear interpolation technique such as linear extrapolation or straight-line extrapolation with a smaller amount of calculation may be used. When it is not necessary to consider covariate shifts and class balance changes such as when data in the assumed domain can be collected comprehensively, linear interpolation or polynomial interpolation may be used instead of extrapolation.

Third Embodiment

A third embodiment differs from the second embodiment in that a statistical hypothesis test is used for each element $z^{\wedge}_i$ of the vector $z^{\wedge\rightarrow}$ on the m-dimensional principal component space. In the third embodiment, this difference will be described and description of the same aspects will be omitted.

*** Description of Operation***

Referring to Fig. 6, the first data transmission process of the transfer source device 20 according to the third embodiment will be described.

In step S12, the normalization unit 212 normalizes the vector $z^{\rightarrow}$ with $z_{min} = 0$ and $z_{max} = 1$ to generate a vector $z^{\wedge\rightarrow}$, as in the second embodiment.

In step S13, the statistic calculation unit 213 does not calculate a statistic. The statistic calculation unit 213 removes outliers or noise and performs data interpolation or extrapolation in order to prevent a decrease in test accuracy in the statistical hypothesis test.

Referring to Fig. 12, the second data transmission process of the transfer target device 30 according to the third embodiment will be described.

In step S22, the normalization unit 312 normalizes the vector $z^{\rightarrow}$ with $z_{min} = 0$ and $z_{max} = 1$ to generate a vector $z^{\wedge\rightarrow}$, as in step S12 of Fig. 6.

In step S23, the statistic calculation unit 313 removes outliers or noise and performs data interpolation or extrapolation in order to prevent a decrease in test accuracy in the statistical hypothesis test, as in step S13 of Fig. 6.

Referring to Fig. 13, the search process of the search device 10 according to the third embodiment will be described.

In step S31, the similarity judgment unit 113 calculates a similarity degree by the statistical hypothesis test. In the statistical hypothesis test, a null hypothesis $H_0$ and an alternative hypothesis $H_1$ are defined, and the rejection of $H_0$ causes $H_1$ to be adopted. To calculate a similarity degree from a test result, the similarity judgment unit 113 defines a case where $H_0$ is rejected as 0 and defines a case where $H_0$ cannot be rejected as 1, and binarizes the test result. However, note that even if the test result is 1, $H_0$ is not adopted. As samples for the test, $(z^{\wedge}_i{}^{(T)})_{y\_k}$ and $(z^{\wedge}_i{}^{(S)})_{y\_1}$ are used. The subscripts $y_k$ and $y_i$ denote elements $z^{\wedge}_i$ of the feature vector $z^{\wedge\rightarrow}$ corresponding to label $y_k$ and label $y_i$,

respectively.

As indicated in Formula 16, the similarity judgment unit 113 calculates the similarity degree by weighting the test result with the contribution rate PVi, as in the second embodiment.

[Formula 16]

$$
score_{\left(y_k^{(T)},\, y_l^{(S)}\right)}
$$

$$
= \sum_{i=1}^{\min\left(m^{(T)},\, m^{(S)}\right)} \left\{ PV_i^{(T)} \cdot Test\left(\left(\hat{z}_i^{(T)}\right)_{y_k},\, \left(\hat{z}_i^{(S)}\right)_{y_l}\right)\right\}
$$

$$
Test = \begin{cases} 1 & ,\text{if } H_0 \text{ cannot be rejected} \\ 0 & ,\text{if } H_0 \text{ is rejected} \end{cases}
$$

In Formula 16, Test is the binarized value of the test result.

In other words, the similarity judgment unit 113 treats each feature axis as a subject feature axis, and determines a similarity between the first data and the second data with respect to the subject feature axis by the statistical hypothesis test. Then, the similarity judgment unit 113 judges whether the first data and the second data are similar by calculating a linear combination of results each obtained by weighting the determined similarity according to the information content on the subject feature axis.

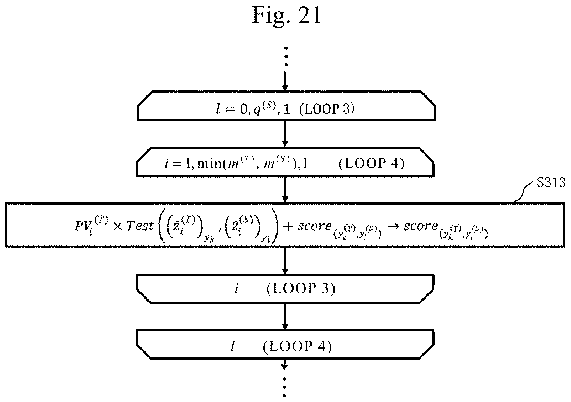

Referring to Fig. 21, the similarity judgment process according to the third embodiment will be described.

The similarity judgment process differs from Fig. 20 in processing of step S313. In step S313, the similarity judgment unit 113 wights a test result of the statistical hypothesis test between the element $z^{\wedge}_i{}^{(T)}$ corresponding to label $y_k{}^{(T)}$ and the element $z^{\wedge}_i{}^{(S)}$ corresponding to label $y_1{}^{(S)}$ with the contribution rate $PV_i{}^{(T)}$ of the element $z^{\wedge}_i$, and adds it to score($y_k{}^{(T)}$, $y_1{}^{(S)}$).

To select a test method, the following conditions need to be considered depending on the identification of the transfer source device 20 and the transfer target device 30.

(1) Normality cannot be assumed.
(2) The numbers of samples are different (two independent samples, unpaired samples)

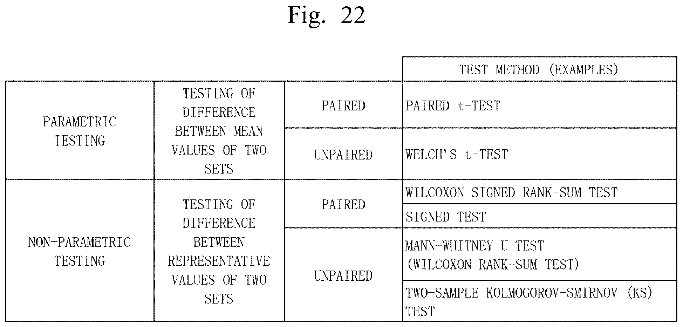

When the conditions (1) and (2) are satisfied, unpaired non-parametric testing indicated in Fig. 22 is used. The unpaired non-parametric testing includes the Mann-Whitney U test and the two-sample Kolmogorov-Smirnov test. In the Mann-Whitney U test, the null hypothesis $H_0$ is "both samples are extracted from the same population", and the alternative hypothesis Hi is "both samples are extracted from different populations". In the two-sample Kolmogorov-Smirnov test, the null hypothesis $H_0$ is "the probability distributions of the populations of both samples are equal", and the alternative hypothesis Hi is "the probability distributions of the populations of both samples are not equal".

Depending on the characteristics of the transfer source device 20 and the transfer target device 30, it may be possible to assume that sets of data are paired or are in accordance with some distribution such as a normal distribution. In such a case, parametric testing may be used.

*** Effects of Third Embodiment ***

As described above, the learning model search system 100 according to the third embodiment judges a similarity by the statistical hypothesis test. This allows the similarity between the populations of input samples, instead of between input samples, to be judged strictly, so that an appropriate judgment can be made.

The learning model search system 100 according to the third embodiment performs the statistical hypothesis test using the vectors $z^{\wedge \rightarrow}$ obtained by performing a basis transformation and normalization. This allows the test to be performed between elements of input vectors, so that an existing low-dimensional statistical hypothesis test method can be used also for high-dimensional input vectors.

Fourth Embodiment

A fourth embodiment differs from the first embodiment in that a cosine similarity degree between mean vectors of the vectors $z^{\wedge \rightarrow}$ on the m-dimensional principal component space is used as a statistic, in place of image data obtained by creating a two-dimensional image. In the fourth embodiment, this difference will be described and description of the same aspects will be omitted.

*** Description of Operation ***

Referring to Fig. 6, the first data transmission process of the transfer source device 20 according to the fourth embodiment will be described.

In step S12, the normalization unit 212 normalizes the vector $z^{\rightarrow}$ with $z_{min} = 0$ and $z_{max} = 1$ to generate a vector $z^{\wedge \rightarrow}$.

In step S13, the statistic calculation unit 213 calculates an arithmetic mean vector $z^{\wedge \rightarrow -}$ as a representative value for the vector $z^{\wedge \rightarrow}$, as indicated in Formula 17.

[Formula 17]

$$\bar{\vec{\hat{z}}} = \frac{\sum \vec{\hat{z}}}{|\vec{z}|}$$

In Formula 17, $|z^{\rightarrow}|$ is the total number ($N_{y\_x}$) of feature vectors $z^{\rightarrow}$.

Referring to Fig. 12, the second data transmission process of the transfer target device 30 according to the fourth embodiment will be described.

In step S22, the normalization unit 312 normalizes the vector $z^{\rightarrow}$ with $z_{min} = 0$ and $z_{max} = 1$ to generate vector $z^{\wedge \rightarrow}$, as in step S12 of Fig. 6.

In step S23, the statistic calculation unit 313 calculates an arithmetic mean vector $z^{\wedge \rightarrow -}$ as a representative value for the vector $z^{\wedge \rightarrow}$, as in step S13 of Fig. 6.

Referring to Fig. 13, the search process of the search device 10 according to the second embodiment will be described.

In step S31, the similarity judgment unit 113 calculates a cosine similarity degree between the arithmetic mean vector $z^{\wedge \rightarrow -(T)}$ and the arithmetic mean vector $z^{\wedge \rightarrow -(S)}$, as indicated in Formula 18.

[Formula 18]

$$score_{\left(y_k^{(T)}, y_l^{(S)}\right)} = \cos\left(\left(\bar{\vec{\hat{z}}}^{(T)}\right)_{y_k}, \left(\bar{\vec{\hat{z}}}^{(S)}\right)_{y_l}\right)$$

$$= \frac{\sum_{i=1}^{\min(m^{(T)}, m^{(S)})} \left\{\left(\bar{\hat{z}}_i^{(T)}\right)_{y_k} \cdot \left(\bar{\hat{z}}_i^{(S)}\right)_{y_l}\right\}}{\sqrt{\sum_{i=1}^{\min(m^{(T)}, m^{(S)})} \left\{\left(\bar{\hat{z}}_i^{(T)}\right)_{y_k}\right\}^2} \cdot \sqrt{\sum_{i=1}^{\min(m^{(T)}, m^{(S)})} \left\{\left(\bar{\hat{z}}_i^{(S)}\right)_{y_l}\right\}^2}}$$

In other words, the similarity judgment unit 113 calculates the representative values for the first data and the second data, and judges whether the first data and the second data are similar based on the representative values. In particular, the similarity judgment unit 113 judges whether the first data and the second data are similar by calculating the cosine similarity degree between the representative value for the first data and the representative value for the second data.

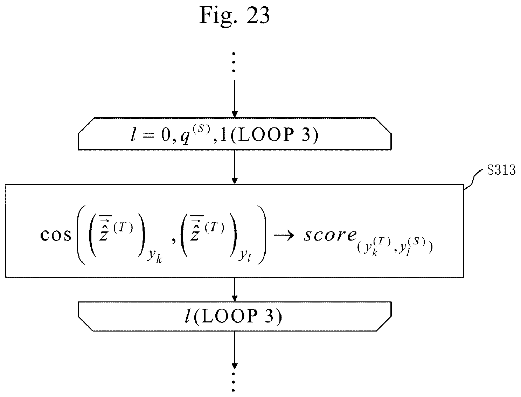

Referring to Fig. 23, the similarity judgment process according to the fourth embodiment will be described.

In the similarity judgment process, processing of step S313 is different from the processing indicated in Fig. 14. In step S313, the similarity judgment unit 113 calculates a cosine similarity degree between the arithmetic mean vector $z^{\wedge \rightarrow -(T)}$ and the arithmetic mean vector $z^{\wedge \rightarrow -(S)}$, and sets it in $score(y_k^{(T)}, y_1^{(S)})$.

*** Effects of Fourth Embodiment ***

As described above, the learning model search system 100 according to the fourth embodiment judges a similarity based on the cosine similarity degree between the mean vectors of vectors $z^{\wedge\rightarrow}$. This allows a similarity to be judged with one comparison regardless of the number of input samples, so that the search speed can be kept constant.

*** Other Configuration ***

<Eighth Variation>

In the fourth embodiment, the arithmetic mean vector is used as the representative value. However, as the representative value, values such as the trimmed mean, median, quantile, centroid, mode, and k-nearest neighbors may be used.

In the above description, the vector indicated in Formula 19 is denoted as $z^\rightarrow$ in the text of the description. The normalized vector indicated in Formula 20 is denoted as $z^{\wedge\rightarrow}$ in the text of the description. The arithmetic mean vector indicated in Formula 21 is denoted as $z^{\wedge\rightarrow-}$ in the text of the description. In the text of the description, x_y means $x_y$.

$$[\text{Formula 19}]$$

$$\vec{z}$$

$$[\text{Formula 20}]$$

$$\vec{\hat{z}}$$

$$[\text{Formula 21}]$$

$$\overline{\vec{\hat{z}}}$$

The embodiments and variations of the present invention have been described above. Two or more of these embodiments and variations may be implemented in combination. Alternatively, one or more of these embodiments and variations may be implemented partially. The present invention is not limited to the above embodiments and variations, and various modifications are possible as needed.

**Reference Signs List**

100: learning model search system, 10: search device, 11: processor, 12: memory, 13: storage, 14: communication interface, 15: electronic circuit, 111: first acquisition unit, 112: second acquisition unit, 113: similarity judgment unit, 114: map generation unit, 115: data transmission unit, 131: learning model storage unit, 132: statistic storage unit, 20: transfer source device, 21: processor, 22: memory, 23: storage, 24: communication interface, 25: electronic circuit, 211: basis transformation unit, 212: normalization unit, 213: statistic calculation unit, 214: data transmission unit, 231: learning model storage unit, 232: training data storage unit, 30: transfer target device, 31: processor, 32: memory, 33: storage, 34: communication interface, 35: electronic circuit, 311: basis transformation unit, 312: normalization unit, 313: statistic calculation unit, 314: data transmission unit, 315: data acquisition unit, 316: learning model generation unit, 317: input data transformation unit, 318: output label transformation unit, 40: transmission channel, 50: sensor, 60: sensor.

**Claims**

1. A search device comprising:

   a first acquisition unit to acquire first data obtained by performing a basis transformation on a feature vector in a transfer source device based on information content on each feature axis;

a second acquisition unit to acquire second data obtained by performing a basis transformation on a feature vector in a transfer target device based on information content on each feature axis; and

a similarity judgment unit to judge whether the first data acquired by the first acquisition unit and the second data acquired by the second acquisition unit are similar.

2. The search device according to claim 1,
wherein the first data and the second data are each obtained by normalizing a scale of the feature vector after the basis transformation is performed on the feature vector.

3. The search device according to claim 2,
wherein the first data and the second data are each obtained by calculating a statistic of a distribution of pixel values of image data obtained by creating a two-dimensional image of the feature vector after being normalized.

4. The search device according to claim 3,
wherein the similarity judgment unit judges whether the first data and the second data are similar based on a similarity in terms of an increase/decrease relationship between the first data and the second data.

5. The search device according to claim 2,
wherein the first data and the second data are each obtained by calculating a statistic of a distribution of values on each feature axis after the feature vector is normalized.

6. The search device according to claim 5,
wherein the similarity judgment unit treats each feature axis as a subject feature axis, and judges whether the first data and the second data are similar by calculating a linear combination of results each obtained by weighting a similarity in terms of an increase/decrease relationship between the first data and the second data with respect to the subject feature axis, the weighting being performed according to information content on the subject feature axis.

7. The search device according to claim 2,
wherein the similarity judgment unit treats each feature axis as a subject feature axis, and judges whether the first data and the second data are similar by identifying a similarity between the first data and the second data with respect to the subject feature axis by a statistical hypothesis test, and calculating a linear combination of results each obtained by weighting the similarity according to information content on the subject feature axis.

8. The search device according to claim 2,
wherein the similarity judgment unit calculates representative values respectively for the first data and the second data, and judges whether the first data and the second data are similar based on the representative values.

9. The search device according to claim 8,
wherein the similarity judgment unit judges whether the first data and the second data are similar by calculating a cosine similarity degree between the representative value for the first data and the representative value for the second data.

10. The search device according to any one of claims 1 to 9, further comprising
a map generation unit to, when it is judged by the similarity judgment unit that the first data and the second data are similar, generate a data map for matching the feature vector in the transfer target device with the feature vector in the transfer source device based on the basis transformation when the first data is generated and the basis transformation when the second data is generated.

11. The search device according to claim 10,

wherein in the feature vector in the transfer source device and the feature vector in the transfer target device, a label is assigned to each element, and

wherein the map generation unit generates a label map that indicates a correspondence relationship between labels of the first data and labels of the second data based on a similarity degree between the first data and the second data.

12. A search method comprising:

acquiring first data obtained by performing a basis transformation on a feature vector in a transfer source device based on information content on each feature axis, by a first acquisition unit;

acquiring second data obtained by performing a basis transformation on a feature vector in a transfer target device based on information content on each feature axis, by a second acquisition unit; and

judging whether the first data and the second data are similar, by a similarity judgment unit.

13. A search program that causes a computer to function as a search device that performs:

a first acquisition process of acquiring first data obtained by performing a basis transformation on a feature vector in a transfer source device based on information content on each feature axis;

a second acquisition process of acquiring second data obtained by performing a basis transformation on a feature vector in a transfer target device based on information content on each feature axis; and

a similarity judgment process of judging whether the first data acquired by the first acquisition process and the second data acquired by the second acquisition process are similar.

14. A learning model search system comprising a search device and a transfer target device,

wherein the search device includes

a first acquisition unit to acquire first data obtained by performing a basis transformation on a feature vector in a transfer source device based on information content on each feature axis;

a second acquisition unit to acquire second data obtained by performing a basis transformation on a feature vector in the transfer target device based on information content on each feature axis; and

a similarity judgment unit to judge whether the first data acquired by the first acquisition unit and the second data acquired by the second acquisition unit are similar, and

wherein the transfer target device includes a learning model generation unit to, when it is judged by the similarity judgment unit that the first data and the second data are similar, generate a learning model based on a learning model of the transfer source device.

15. The learning model search system according to claim 14,

wherein the first acquisition unit treats each of a plurality of transfer source devices as a subject transfer source device, and acquires the first data of the subject transfer source device,

wherein the similarity judgment unit treats each of the plurality of transfer source devices as a subject transfer source device, and judges whether the first data of the subject transfer source device and the second data are similar, and

wherein when it is judged that the first data of two or more transfer source devices and the second data are similar, the learning model generation unit generates a learning model based on learning models of the two or more transfer source devices.

# Fig. 1

100: LEARNING MODEL SEARCH SYSTEM

SEARCH DEVICE 10

40: TRANSMISSION CHANNEL

TRANSFER SOURCE DEVICE 20

TRANSFER TARGET DEVICE 30

SENSOR 50

SENSOR 60

# Fig. 2

Fig. 3

TRANSFER SOURCE DEVICE 20

PROCESSOR 21

BASIS TRANSFORMATION UNIT 211

NORMALIZATION UNIT 212

STATISTIC CALCULATION UNIT 213

DATA TRANSMISSION UNIT 214

COMMUNICATION INTERFACE 24

MEMORY 22

STORAGE 23

TRAINING DATA STORAGE UNIT 232

LEARNING MODEL STORAGE UNIT 231

Fig. 4

TRANSFER TARGET DEVICE (30)

PROCESSOR (31)

DATA ACQUISITION UNIT (315)

MEMORY (32)

BASIS TRANSFORMATION UNIT (311)

LEARNING MODEL GENERATION UNIT (316)

STORAGE (33)

COMMUNICATION INTERFACE (34)

NORMALIZATION UNIT (312)

INPUT DATA TRANSFORMATION UNIT (317)

LEARNING MODEL STORAGE UNIT (331)

STATISTIC CALCULATION UNIT (313)

OUPUT LABEL TRANSFORMATION UNIT (318)

OBSERVATION DATA STORAGE UNIT (332)

DATA TRANSMISSION UNIT (314)

EP 4 033 417 A1

Fig. 5

# Fig. 6

```
┌──────────────┐
│    START     │
└──────────────┘
        │
        ▼                           ⌇ S11
┌──────────────────────────────┐
│     BASIS TRANSFORMATION      │
└──────────────────────────────┘
        │
        ▼                           ⌇ S12
┌──────────────────────────────┐
│        NORMALIZATION          │
└──────────────────────────────┘
        │
        ▼                           ⌇ S13
┌──────────────────────────────┐
│      CALCULATE STATISTIC      │
└──────────────────────────────┘
        │
        ▼                           ⌇ S14
┌──────────────────────────────┐
│      TRANSMIT STATISTIC       │
└──────────────────────────────┘
        │
        ▼                           ⌇ S15
┌──────────────────────────────┐
│   TRANSMIT LEARNING MODEL      │
└──────────────────────────────┘
        │
        ▼
┌──────────────┐
│     END      │
└──────────────┘
```

EP 4 033 417 A1

Fig. 7

$PV_1 = 0.7$

$PV_2 = 0.3$

$\vec{x} = (x_1, x_2)$

PRINCIPAL
COMPONENT
ANALYSIS

$\vec{z} = (z_1, z_2)$

Fig. 8

NORMALIZATION

$z_1$, $z_2$, $\vec{z}$, $\hat{\vec{z}}$, $z_{max}$, $z_{min}$

Fig. 9

EP 4 033 417 A1

Fig.10

Fig. 11

Fig. 12

```
                    ┌─────────────┐
                    │    START    │
                    └─────────────┘
                           │
                           ▼                    ╭─S21
        ┌──────────────────────────────────────┐
        │         BASIS TRANSFORMATION         │
        └──────────────────────────────────────┘
                           │
                           ▼                    ╭─S22
        ┌──────────────────────────────────────┐
        │            NORMALIZATION              │
        └──────────────────────────────────────┘
                           │
                           ▼                    ╭─S23
        ┌──────────────────────────────────────┐
        │          CALCULATE STATISTIC         │
        └──────────────────────────────────────┘
                           │
                           ▼                    ╭─S24
        ┌──────────────────────────────────────┐
        │           TRANSMIT STATISTIC         │
        └──────────────────────────────────────┘
                           │
                           ▼
                    ┌─────────────┐
                    │     END     │
                    └─────────────┘
```

EP 4 033 417 A1

# Fig. 13

```
                    ┌─────────────┐
                    │    START    │
                    └──────┬──────┘
                           │              ⌒S31
        ┌──────────────────▼──────────────────┐
        │ JUDGE SIMILARITY BETWEEN SECOND DATA │
        │    AND EACH SET OF FIRST DATA        │
        └──────────────────┬──────────────────┘
                           │
       ╱───────────────────▼───────────────────╲
       │      FOR TRANSFER TARGET CANDIDATE      │
       ╲────────────────────┬────────────────────╱
                           │              ⌒S32
        ┌──────────────────▼──────────────────┐
        │          GENERATE LABEL MAP g        │
        └──────────────────┬──────────────────┘
                           │              ⌒S33
        ┌──────────────────▼──────────────────┐
        │          GENERATE DATA MAP f         │
        └──────────────────┬──────────────────┘
                           │              ⌒S34
        ┌──────────────────▼──────────────────┐
        │   TRANSMIT LABEL MAP g, DATA MAP f,  │
        │        AND LEARNING MODEL            │
        └──────────────────┬──────────────────┘
                           │
       ╱───────────────────▼───────────────────╲
       │                                         │
       ╲────────────────────┬────────────────────╱
                           │
                    ┌──────▼──────┐
                    │     END     │
                    └─────────────┘
```

EP 4 033 417 A1

# Fig. 14

START

$0 \rightarrow score_{max}$ — S311

$r = 0, q^{(T)} - 1, 1 \quad$ (LOOP 1)

$y_k^{(T)} \in (y_r^{(T)}, y_{1+r}^{(T)} ..., y_{(q^{(T)}-1+r) \bmod q^{(T)}}^{(T)})$ (LOOP 2)

$\{ \} \rightarrow \{used\}$ — S312

$l = 0, q^{(S)}, 1 \quad$ (LOOP 3)

$pearsonr\left(\hat{f}_h^{(T)}(x)_{y_k}, \hat{f}_h^{(S)}(x)_{y_l}\right) \rightarrow score_{(y_k^{(T)}, y_l^{(S)})}$ — S313

$l$(LOOP 3)

$\{used, y_l^{(S)}\} \rightarrow \{used\}, score_{(y_k^{(T)}, y_l^{(S)})} \rightarrow score_{tmp},$

$\{(y_k^{(T)}, y_l^{(S)}), g_{tmp}\} \rightarrow g_{tmp}$

$s.t. \max(score_{(y_k^{(T)}, y_l^{(S)})}) \wedge y_l^{(S)} \notin \{used\}$

— S314

$y_k^{(T)}$ (LOOP 2)

$score_{max} < score_{tmp}$ — S315

NO

YES

$score_{tmp} \rightarrow score_{max}$ — S316

$g_{tmp} \rightarrow g$ — S317

r(LOOP 1)

END

# Fig. 15

ORIGINAL COORDINATE SYSTEM

COORDINATE SYSTEM AFTER BASIS TRANSFORMATION

TRANSFER TARGET

PRINCIPAL COMPONENT ANALYSIS

$\sigma^2_{x_2^{(T)}} > \sigma^2_{x_1^{(T)}} \Rightarrow (x_2^{(T)}, x_1^{(T)})$

$\sigma^2_{z_1^{(T)}} > \sigma^2_{z_2^{(T)}} \Rightarrow (z_1^{(T)}, z_2^{(T)})$

SIMILARITY COMPARISON

TRANSFER SOURCE

PRINCIPAL COMPONENT ANALYSIS

$\sigma^2_{x_1^{(S)}} > \sigma^2_{x_2^{(S)}} \Rightarrow (x_1^{(S)}, x_2^{(S)})$

$\sigma^2_{z_1^{(S)}} > \sigma^2_{z_2^{(S)}} \Rightarrow (z_1^{(S)}, z_2^{(S)})$

EP 4 033 417 A1

Fig. 16

```
            ┌─────────────┐
            │    START    │
            └──────┬──────┘
                   │
                   ▼            ⌒S41
  ┌────────────────────────────────┐
  │     GENERATE LEARNING MODEL     │
  └────────────────┬───────────────┘
                   │
                   ▼            ⌒S42
  ┌────────────────────────────────┐
  │          TRANSFORM DATA          │
  └────────────────┬───────────────┘
                   │
                   ▼            ⌒S43
  ┌────────────────────────────────┐
  │   INPUT DATA INTO LEARNING MODEL │
  └────────────────┬───────────────┘
                   │
                   ▼            ⌒S44
  ┌────────────────────────────────┐
  │      TRANSFORM OUPUT LABEL       │
  └────────────────┬───────────────┘
                   │
                   ▼
            ┌─────────────┐
            │     END     │
            └─────────────┘
```

EP 4 033 417 A1

Fig. 17

# Fig. 18

```
          START
            │
            ▼                        S51
┌─────────────────────────────┐
│   GENERATE LEARNING MODEL   │
└─────────────────────────────┘
            │
            ▼                        S52
┌─────────────────────────────┐
│  SELECT WEAK LEARNING MODEL │
└─────────────────────────────┘
            │
            ▼                        S53
┌─────────────────────────────┐
│       TRANSFORM DATA        │
└─────────────────────────────┘
            │
            ▼                        S54
┌─────────────────────────────┐
│ INPUT DATA INTO LEARNING MODEL │
└─────────────────────────────┘
            │
            ▼
        ╱ HAS LABEL BEEN ╲   NO
       ╱    OUTPUT?       ╲─────►
        ╲                 ╱
            │ YES
            ▼                        S56
┌─────────────────────────────┐
│    TRANSFORM OUPUT LABEL    │
└─────────────────────────────┘
            │
            ▼
           END
```

Fig. 19

## Fig. 20

$$l = 0, q^{(S)}, 1 \quad (\text{LOOP } 3)$$

$$i = 1, \min(m^{(T)}, m^{(S)}), 1 \quad (\text{LOOP } 4)$$

$$PV_i^{(T)} \times pearsonr\left(\hat{f}_h^{(T)}(x)_{y_k}, \hat{f}_h^{(S)}(x)_{y_l}\right) + score_{(y_k^{(T)}, y_l^{(S)})} \to score_{(y_k^{(T)}, y_l^{(S)})} \qquad S313$$

$$i \quad (\text{LOOP } 4)$$

$$l \quad (\text{LOOP } 3)$$

Fig. 21

$$\vdots$$

$$l = 0, q^{(S)}, 1 \quad (\text{LOOP 3})$$

$$i = 1, \min(m^{(T)}, m^{(S)}), 1 \quad (\text{LOOP 4})$$

S313

$$PV_i^{(T)} \times Test\left(\left(\hat{z}_i^{(T)}\right)_{y_k}, \left(\hat{z}_i^{(S)}\right)_{y_l}\right) + score_{(y_k^{(T)}, y_l^{(S)})} \to score_{(y_k^{(T)}, y_l^{(S)})}$$

$$i \quad (\text{LOOP 3})$$

$$l \quad (\text{LOOP 4})$$

$$\vdots$$

EP 4 033 417 A1

Fig. 22

|  |  |  | TEST METHOD (EXAMPLES) |
|---|---|---|---|
| PARAMETRIC TESTING | TESTING OF DIFFERENCE BETWEEN MEAN VALUES OF TWO SETS | PAIRED | PAIRED t-TEST |
| | | UNPAIRED | WELCH'S t-TEST |
| NON-PARAMETRIC TESTING | TESTING OF DIFFERENCE BETWEEN REPRESENTATIVE VALUES OF TWO SETS | PAIRED | WILCOXON SIGNED RANK-SUM TEST |
| | | | SIGNED TEST |
| | | UNPAIRED | MANN-WHITNEY U TEST (WILCOXON RANK-SUM TEST) |
| | | | TWO-SAMPLE KOLMOGOROV-SMIRNOV (KS) TEST |

## Fig. 23

$$l = 0, q^{(S)}, 1 \text{(LOOP 3)}$$

$$\cos\left(\left(\overline{\overline{\vec{z}}}^{(T)}\right)_{y_k}, \left(\overline{\overline{\vec{z}}}^{(T)}\right)_{y_l}\right) \rightarrow score_{(y_k^{(T)}, y_l^{(S)})}$$

S313

$$l \text{(LOOP 3)}$$

**INTERNATIONAL SEARCH REPORT**

| International application No. |
| --- |
| PCT/JP2019/040614 |

A. CLASSIFICATION OF SUBJECT MATTER
Int.Cl. G06N20/00(2019.01)i, G06F16/90(2019.01)i

According to International Patent Classification (IPC) or to both national classification and IPC

B. FIELDS SEARCHED

Minimum documentation searched (classification system followed by classification symbols)
Int.Cl. G06N3/00-99/00, G06F16/00-16/958, G06T7/00, G10L15/00-17/26

Documentation searched other than minimum documentation to the extent that such documents are included in the fields searched
Published examined utility model applications of Japan    1922-1996
Published unexamined utility model applications of Japan    1971-2019
Registered utility model specifications of Japan    1996-2019
Published registered utility model applications of Japan    1994-2019

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| A | JP 2017-224156 A (CANON INC.) 21 December 2017, abstract, paragraphs [0056]-[0061], fig. 8 & US 2017/0364826 A1, abstract, [paragraphs [0100]-[0110], fig. 8 & EP 3258425 A1 & CN 107527063 A | 1-15 |
| A | US 2016/0253597 A1 (XEROX CORPORATION) 01 September 2016, entire text, all drawings (in particular, paragraphs [0043], [0050], [0072]) (Family: none) | 1-15 |

☒   Further documents are listed in the continuation of Box C.    ☐   See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| 20 November 2019 (20.11.2019) | 03 December 2019 (03.12.2019) |

| Name and mailing address of the ISA/ Japan Patent Office 3-4-3, Kasumigaseki, Chiyoda-ku, Tokyo 100-8915, Japan | Authorized officer Telephone No. |
| --- | --- |

Form PCT/ISA/210 (second sheet) (January 2015)

**EP 4 033 417 A1**

**INTERNATIONAL SEARCH REPORT**

| | International application No. |
|---|---|
| | PCT/JP2019/040614 |

C (Continuation).   DOCUMENTS CONSIDERED TO BE RELEVANT

| Category* | Citation of document, with indication, where appropriate, of the relevant passages | Relevant to claim No. |
|---|---|---|
| A | 森 郁海 ほか，分散エッジ環境における機械学習実現最適化の検討，情報処理学会研究報告 マルチメディア通信と分散処理(DPS) [online], 24 January 2019, vol. 2019-DPS-177, no. 2, pp. 1-8, [retrieval date 28 January 2019], Internet: <URL:https://ipsj.ixsq.nii.ac.jp/ej/?action=repository_uri&item_id=194230&file_id=1&file_no=1>, ISSN: 2188-8906, in particular, chapter 6, (MORI, Ikumi et al., "A Study on Optimisation of Machine Learning Realization In Edge Computing", IPSJ SIG technical reports: Distributed processing system (DPS) [online]) | 1-15 |

Form PCT/ISA/210 (continuation of second sheet) (January 2015)

46

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016191975 A


**Non-patent literature cited in the description**

- **MASASHI SUGIYAMA ; MAKOTO YAMADA ; MARTHINUS CHRISTOFFEL DU PLESSIS ; SONG LIU.** Learning under Non-Stationarity: Covariate Shift Adaptation, Class-Balance Change Adaptation, and Change Detection. Nihon Tokei Gakkai Shi, 2014, vol. 44, 113-136